# EUROPEAN PATENT SPECIFICATION

(11) **EP 0 583 882 B1**
(45) Date of publication and mention of the grant of the patent: **26.03.1997**
(21) Application number: 93305577.4
(22) Date of filing: 15.07.1993
(51) Int. Cl.: C09K 3/10

(54) **Sealant composition and items using said sealant**
Verschlussdichtung und Gegenstände die diese Dichtung verwenden
Composition de scellement et objets utilisant ce scellement

(30) Priority: 23.07.1992 GB 9215702
(43) Date of publication of application: 23.02.1994
(73) Proprietor: SMITH METERS LIMITED, Streatham Vale London, SW16 5JE (GB)
(72) Inventor: Meyer, Kenneth David, Streatham, London SW 16 6DY (GB)
(74) Representative: Spence, Anne

(56) References cited:
- EP-A- 0 271 296
- EP-A- 0 481 624
- DE-A- 2 415 104
- GB-A- 2 084 600
- GB-A- 2 127 911

## Description

This invention relates to gas meters sealed with a sealant composition which retains some at least of its sealing ability after exposure to high temperatures.

Gas meters and other items which in use contain inflammable or dangerous gas are required to be effectively gas tight in normal use. They are also required to pass a fire test in which they are subjected to very high temperature of the order found in fires and are tested for leaks. The leak rate accepted is higher than the virtual gas tightness of normal use, but must be low enough for the item not to be a source of additional danger in a fire.

In a gas meter, for instance, a face-to-face seal is made in the casing with the faces as flat as can conveniently be made with a sealant based on silicone or polyurethane between the two faces. This arrangement causes problems because it is difficult to achieve the high degree of flatness needed, the faces tend to buckle under high temperature treatment, and the sealant, and any paint on the surface, is almost totally burned away, leaving unacceptably large leakage gaps.

EP-A-0481624 describes a sealing composition for a mineral insulated electric cable termination. The sealing composition consists of polyphenyl ether or a fluorinated ether with an inert solid filler. The filler is used as an insulant and would melt at fire temperatures. The polyphenyl ether or fluorinated polyether would not be sufficiently rubbery to provide a good face to face contact seal.

GB-A-2084600 describes a sealant based on latex either from a natural rubber or created in an aqueous solution by emulsion polymerisation. The latex type sealants would decompose at about 200°C.

GB-A-0271296 describes a curable silicon based sealant with a ceramic filler for use in the building trade. The filler is added to reduce the specific gravity and there is no indication that the sealant could be suitable for high temperature use.

The invention provides a gas meter which in use contains an inflammable or dangerous gas and having a face-to-face seal and in said face-to-face seal a sealant composition comprising a curable silicone or polyuretheane, characterised by the sealant composition including a minor proportion by weight of fine ceramic beads, such that the sealant composition operates substantially without deterioration at temperatures up to 250°C, and at higher temperatures up to 821°C, as the curable silicone or polyurethane deteriorates the beads act to continue to close spaces between the faces and eventually to distort and coalesce and adhere to one another and ash formed from the curable silicone or polyurethane to maintain an acceptable seal.

It will be apparent that the proportion of ceramic beads to the curable fluid must be sufficient to provide enough material remaining after the fire test to meet the leak requirements, and this proportion is most conveniently determined by experiment for each design of the item being sealed. The size of the beads most suitable is also determined by experiment.

One preferred mixture comprises 9% by weight of ceramic beads to 91% of silicone or polyurethane sealant in its fluid state before curing. A preferred bead size range for the ceramic is a majority of beads between 45 - 100 microns diameter. The ceramic is one which does not have a damaging effect on the silicone or polyurethane and is preferably silicon dioxide.

In the drawings: -
- Figure 1: is a section through a seal before a fire test seen through a microscope, and
- Figure 2: is a section through a similar seal to that of Figure 1 after the fire test, seen through a microscope.

A specific embodiment of the invention comprises a gas meter having a two part casing, each part pressed into a concave shape with a lip. The lips form flats facing one another and secured together to seal the casing. A line of fluid sealant is applied between the flats before they are secured together to close departures from a perfect face-to-face fit between the flats. The fluid sealant comprises a mixture of the silicone based sealant commercially available under the trade name SILCOSET 153 and microscopic ceramic beads in the proportion by weight of 91 : 9. The ceramic beads are mainly silicon dioxide with about 6% of other ceramic material. The bead particle size is mainly less than 100 microns diameter, the consistency appearing like fine flour. The grade of beads used must be carefully cleaned before use to avoid a problem of poisoning the silicone sealant, which can occur with some beads.

The mixture is used as in conventional sealing methods, placed in fluid form between the flats and curing into a solid form after the two parts of the casing are joined together.

The efficacy of the seal meets the leak requirement for normal use. The maximum temperature range at which the silicone sealant operates without deterioration is 250-300°C. In the fire test for British Standard 4161 a meter is subjected to a temperature rise of 821°C. At this temperature all that is left of the silicone sealant is ash. However, the ceramic beads, although they become sticky at about 700°C, still continue to close spaces between the faces. The seal is, of course, not as good as before the fire test and leakage increases, but the beads keep it down to an acceptable safe rate meeting the requirement of BS:4161.

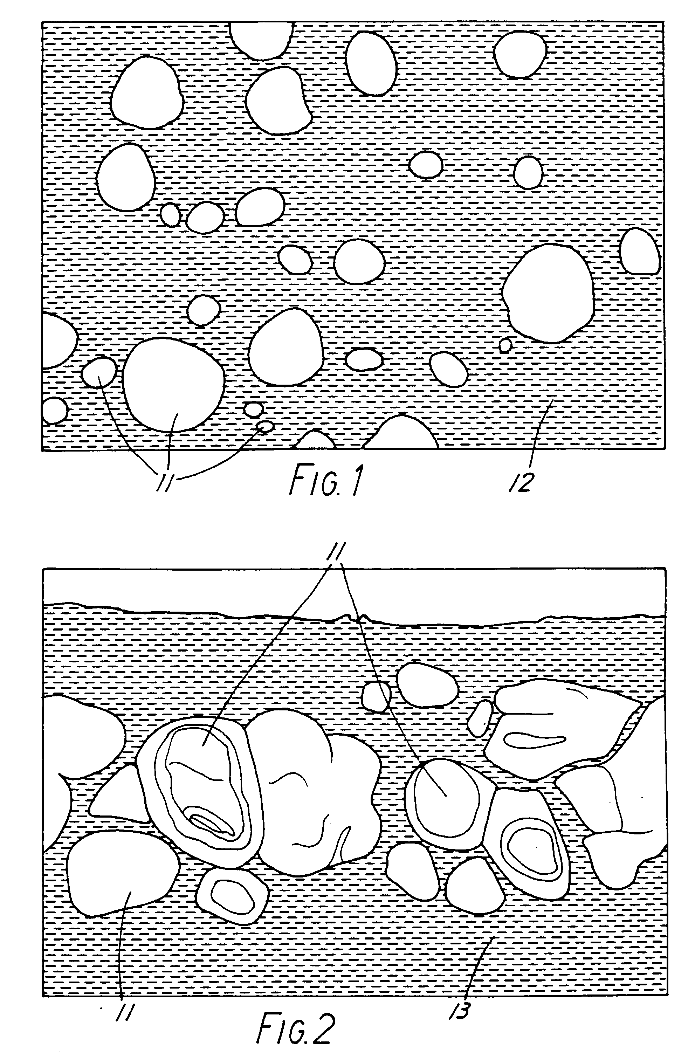

In Figure 1 it can be seen that the beads (11) are spaced apart in the silicone sealant (12) so that there is little, if any, effect on the sealing ability of the sealant. After the fire test, as seen in Figure 2, the beads have distorted and flattened and to some extent coalesced. The temperature to which they have been subjected has been sufficient to soften them and to make them adhere to one another and also to the ash in their vicinity. As can be seen in the drawing, a substantial barrier lies across the seal, even though not a completely gas tight one. The ash (13), the residue of the sealant, is not now gas tight.

It will be understood that the invention includes mixtures of ceramic beads into other fluid curable sealants, and other proportions of beads to sealant, depending on the nature of the surfaces and the degree of fire proofing needed. For instance, proportions of 5% - 10% of beads offer improved fire resistance. Proportions of 10% or more offer even greater fire resistance, but an upper limit is set by the need for the silicone or other sealant to operate substantially unaffected by the beads at normal temperatures.

## Claims

1. A gas meter which in use contains an inflammable or dangerous gas and having a face-to-face seal and in said face-to-face seal a sealant composition comprising a curable silicone or polyurethane, characterised by the sealant composition including a minor proportion by weight of fine ceramic beads (11), such that the sealant composition operates substantially without deterioration at temperatures up to 250°C, and at higher temperatures up to 821°C, as the curable silicone or polyurethane deteriorates the beads act to continue to close spaces between the faces and eventually to distort and coalesce and adhere to one another and ash formed from the curable silicone or polyurethane, to maintain an acceptable seal.

2. A meter as claimed in claim 1, further characterised by said fine ceramic beads (11) being selected of a grade which has no damaging effect on the sealant.

3. A meter as claimed in claim 1 or claim 2, further characterised by said ceramic beads (11) having the consistency of fine flour.

4. A meter as claimed in claim 3, further characterised by a majority of said beads (11) having diameters of between 45 and 100 microns.

5. A meter as claimed in any of claims 1 to 4, further characterised by the majority of the ceramic beads being of silicon dioxide carefully cleaned before use.

6. A meter as claimed in any of claims 1 to 5, further characterised by the ceramic beads (11) being added in a proportion by weight of between 5% and 10%.

7. A meter as claimed in claim 6, further characterised by the ceramic beads (11) being added in a proportion by weight of 9%.

## Patentansprüche

1. Gaszähler für brennbares oder gefährliches Gas mit einer Dichtung zwischen zwei einander gegenüberliegenden Flächen, wobei eine Dichtungsmasse in der zwischen zwei einander gegenüberliegenden Flächen angeordneten Dichtung ein aushärtbares Silikon oder Polyurethan enthält, dadurch gekennzeichnet, daß die Dichtungsmasse einen kleinen Gewichtsanteil an feinen perlenartigen Keramikteilchen (11) aufweist, so daß die Dichtungsmasse im wesentlichen ohne Zersetzung bei Temperaturen bis zu 250 °C wirksam ist und die Teilchen bei höheren Temperaturen bis zu 821 °C, bei denen sich das aushärtbare Silikon oder Polyurethan zersetzen, wirksam werden, um die Räume zwischen den Flächen kontinuierlich zu verschließen und sich gegebenenfalls zu verformen, zusammenzuwachsen und aneinander und der Asche, die sich aus dem aushärtbaren Silikon oder Polyurethan gebildet hat, zu haften, um eine noch brauchbare Dichtung beizubehalten.

2. Zähler nach Anspruch 1, wobei die feinen Keramikteilchen (11) des weiteren aus einer Güteklasse gewählt sind, welche keine schädigende Wirkung auf die Dichtungsmasse ausübt.

3. Zähler nach Anspruch 1 oder 2, wobei die Keramikteilchen (11) des weiteren die Konsistenz von feinem Mehl aufweisen.

4. Zähler nach Anspruch 3, wobei eine Mehrzahl der Teilchen (11) ferner einen Durchmesser zwischen 45 und 100 mµ aufweist.

5. Zähler nach einem der Ansprüche 1 bis 4, wobei ferner die Mehrzahl der aus Siliziumoxid bestehenden Keramikteilchen vor Gebrauch sorgfältig gesäubert wird.

6. Zähler nach einem der Ansprüche 1 bis 5, wobei die Keramikteilchen (11) des weiteren in einem Gewichtsanteil zwischen 5 und 10 % beigefügt sind.

7. Zähler nach Anspruch 6, wobei die Keramikteilchen (11) ferner in einem Gewichtsanteil von 9 % beigefügt sind.

## Revendications

1. Compteur à gaz contenant pendant son utilisation un gaz inflammable ou dangereux et ayant un joint entre faces et, dans ledit joint entre faces, une composition de matériau d'étanchéité comprenant un silicone ou un polyuréthane polymérisable, caractérisé en ce que la composition de matériau d'étanchéité contient une proportion mineure en poids de fines perles de céramique (11), de telle sorte que la composition de matériau d'étanchéité fonctionne sensiblement sans détérioration à des températures allant jusqu'à 250°C et, à des températures plus élevées allant jusqu'à 821°C, à mesure que le silicone ou polyuréthane polymérisable se détériore, les perles agissent pour continuer à fermer les espaces entres les faces et finalement se déformer, fondre et adhérer les unes aux autres et à la cendre formée à partir du silicone ou du polyuréthane polymérisable, afin de maintenir un scellement acceptable.

2. Compteur selon la revendication 1, caractérisé en outre en ce que lesdites fines perles de céramique (11) sont choisies dans une qualité qui n'a pas d'effet préjudiciable sur le matériau d'étanchéité.

3. Compteur selon la revendication 1 ou la revendication 2, caractérisé en outre en ce que lesdites perles de céramique (11) ont la consistance d'une farine fine.

4. Compteur selon la revendication 3, caractérisé en outre en ce que la majeure partie desdites perles (11) ont un diamètre compris entre 45 et 100 microns.

5. Compteur selon l'une quelconque des revendications 1 à 4, caractérisé en outre en ce que la majeure partie des perles de céramique sont en dioxyde de silicium soigneusement nettoyé avant utilisation.

6. Compteur selon l'une quelconque des revendications 1 à 5, caractérisé en outre en ce que les perles de céramique (11) sont ajoutées dans une proportion de 5% à 10% en poids.

7. Compteur selon la revendication 6, caractérisé en outre en ce que les perles de céramique (11) sont ajoutées dans une proportion de 9% en poids.
